# EUROPÄISCHE PATENTSCHRIFT

(11) **EP 0 843 710 B1**
(45) Veröffentlichungstag und Bekanntmachung des Hinweises auf die Patenterteilung: **18.10.2000**
(21) Anmeldenummer: 96927665.8
(22) Anmeldetag: 02.08.1996
(51) Int. Cl.: C09J 125/02, C09D 125/02, C09K 3/10

(54) **POLYSTYROL-BINDEMITTEL**
POLYSTYRENE BINDERS
LIANTS AU POLYSTYRENE

(30) Priorität: 11.08.1995 DE 19531849
(43) Veröffentlichungstag der Anmeldung: 27.05.1998
(60) Teilanmeldung: 00102753.1
(73) Patentinhaber: Henkel Kommanditgesellschaft auf Aktien, 40589 Düsseldorf-Holthausen (DE)
(72) Erfinder: BÖGE, Kai, D-40217 Düsseldorf (DE); DZIALLAS, Michael, D-42781 Haan (DE); HELPENSTEIN, Klaus, D-41199 Mönchengladbach (DE); KLAUCK, Wolfgang, D-40670 Meerbusch (DE); KLEIN, Johann, D-40233 Düsseldorf (DE); LOTH, Helmuth, D-45131 Essen (DE); URBATH, Hartmut, D-42389 Wuppertal (DE); WINDHÖVEL, Udo, D-40789 Monheim (DE)
(86) Internationale Anmeldenummer: EP9603416
(87) Internationale Veröffentlichungsnummer: WO9707173

(56) Entgegenhaltungen:
- EP-A- 0 038 295
- EP-A- 0 256 467
- WO-A-95/11284
- PATENT ABSTRACTS OF JAPAN vol. 016, no. 320 (C-0962), 14.Juli 1992 & JP 04 091150 A (MITSUBISHI KASEI POLYTEC CO), 24.März 1992, & DATABASE WPI Derwent Publications Ltd., London, GB; AN 92-154580
- DATABASE WPI Section Ch, Week 9328 Derwent Publications Ltd., London, GB; Class A81, AN 93-220186 XP002020156 & CN 1 065 673 A (ZHANG G) , 28.Oktober 1992

## Beschreibung

Die Erfindung betrifft Bindemittel auf der Basis von Homo- oder Copolymeren des Styrols, deren Herstellung und Verwendung zum Kleben, Beschichten und Dichten.

Unter Bindemittel sollen solche Stoffe verstanden werden, die gleiche oder verschiedenartige Substrate verbinden oder selbst darauf fest haften können. Sie basieren in der Regel auf Stoffen, insbesondere Polymeren, die chemisch oder physikalisch abbinden. Die physikalische Abbindung besteht in einer Erstarrung aus der Schmelze oder in der Trocknung einer wäßrigen oder organischen Lösung bzw. Dispersion. Die Stoffe bzw. Polymeren werden in der Regel durch Zusätze so modifiziert, daß sie zum Kleben, klebenden Dichten und Beschichten besser geeignet sind. Derartige Zusätze sind z.B. Harze, Weichmacher, Lösungsmittel, Füllstoffe, Pigmente, Beschleuniger, Stabilisatoren und Dispergiermittel. Auf derartig modifizierten Bindemitteln basieren also die Klebstoffe, die Dichtungsmassen und die Beschichtungsmittel.

Weichmacher werden zugesetzt, um bei Klebstoffen, Dichtungsmassen und Beschichtungsmitteln das Formveränderungsvermögen zu verbessern bzw. die Härte zu verringern. Es handelt sich dabei um flüssige oder feste, in der Regel indifferente organische Substanzen mit geringem Dampfdruck. Nach dem allgemeinen Fachwissen (siehe Habenicht, Gerd: "Kleben: Grundlagen, Technologie-Anwendungen", 2. Auflage, 1990, Seite 100) liegt der Nachteil weichmacherhaltiger Klebschichten in den verschlechterten Alterungs- und Haftungseigenschaften, weiterhin in den reduzierten Klebschicht-Festigkeiten, deren Kriechneigung und deren Auswanderungstendenz. Es bedarf daher einer wohl abgewogenen Prüfung der Prioritäten zwischen Verformungsfähigkeit auf der einen Seite und Festigkeit auf der anderen Seite. In "Ullmanns Encyclopädie der technischen Chemie" wird unter dem Stichwort "Weichmacher" auch die Anwendung von Weichmachern beschrieben (siehe Seiten 371 bis 377, Band 24, 4. Auflage, 1983).

Derartige Zusammensetzungen aus Polystyrol und Weichmachern sind bekannt. So wird in der US 4,869,934 eine Zusammensetzung zum Glätten, Reinigen und Beschichten von Fußböden beschrieben, die zum Beispiel aus folgenden Bestandteilen besteht: 31,2 Gew.-Teile eines Copolymerisates aus Butylmethacrylat, Methacrylsäure, Methylmethacrylat und Styrol im Verhältnis 10 : 18 : 52 : 20, 1,6 Gew.-Teile des permanenten Weichmachers (BuOCH₂CH₂O)3PO und 7,0 Gew.-Teile des flüchtigen Weichmachers Me(OC₃H₆)₂OH sowie ca. 48 Gew.-Teile Wasser. Diese bekannte Zusammensetzung hat den Nachteil, daß zumindest die flüchtigen Weichmacher die Umwelt belasten oder gar giftig sind.

In der technischen Information TI/ED 1115 d-1 der BASF vom Januar 1984 wird das Produkt "Plastilit 3060" beschrieben. Dabei handelt es sich um Polypropylenglykol-alkylphenylether, welcher als Weichmacher für Polymerdispersionen eingesetzt wird, insbesondere für Polyacrylate. Als Polymerisate werden konkret genannt: ein Copolymersat von Styrol und Butylacrylat sowie ein Copolymerisat von Ethylacrylat, Ethylhexylacrylat und Acrylnitril. Derartige Zusammensetzungen können z.B. als Dichtungsmassen mit schneller Hautbildung nach dem Applizieren, mit geringerem Nachhärten und mit besserem Dehnverhalten bei tiefen Temperaturen verwendet werden. Außerdem ergeben sie mit Füllstoffen pastöse Fliesenklebstoffe, die gute Haftzugfestigkeiten bei hoher Elastizität aufweisen. Der Weichmacher wirkt elastifizierend auf das Copolymerisat, ohne die Wasseraufnahme des Filmes merklich zu verschlechtern. So steigt die Dehnung eines Filmes nahezu linear von ca. 300 % auf 4 000 % bei Zusatz von 9 % Weichmacher. Zur biologischen Wirkung des Weichmachers wird gesagt, daß er nach den vorliegenden Informationen keine gesundheitsschädlichen Wirkungen habe, wohl seien aber bei längerer Einwirkung Haut- und Schleimhautreizungen möglich.

Die gleichen Nachteile gelten auch für die beiden folgenden Druckschriften. In der polnischen Patentschrift PL 119091 wird ein nicht toxischer und nicht entflammbarer Klebstoff für Keramik und Kunststoffe beschrieben, der neben einer Acrylat/Styrol-Dispersion Polypropylenglykol-alkylphenylether, Füllstoffe und organische Lösungsmittel sowie Wasser enthält.

In der deutschen Patentschrift DE 36 38 224 wird ein elastisches Dichtungsmaterial beschrieben, welches einen Styrol/Butadien-Gummi, ein α-Methylstyrolpolymerisat, Lösungsmittel wie Kohlenwasserstoffe und aromatische Kohlenwasserstoffe sowie Polypropylenglykolalkylphenylether enthält.

In der tschechischen Patentschrift CS 259825 wird ein Haftklebstoff für Etiketten und Bänder beschrieben, welche hauptsächlich ein Copolymerisat aus Acrylaten, ungesättigten Carbonsäuren sowie gegebenenfalls Styrol, Alkylstyrol oder Vinylacetat enthält. Weitere Komponenten sind organische Lösungsmittel, Weichmacher wie z.B. Polyethylenglykol und Polypropylenglykol.

Ausgehend von diesem Stand der Technik bestand die erfindungsgemäße Aufgabe darin, eine toxisch unbedenkliche Zusammensetzung aus einem Styrol-Polymerisat und einem aromatenfreien Weichmacher bereitzustellen, welche als Bindemittel geeignet ist und eine akzeptable Haftung ergibt.

Die erfindungsgemäße Lösung ist den Patentansprüchen zu entnehmen. Sie besteht kennzeichnungsgemäß darin, daß das Styrol-Polymerisat mehr als 50-Gew.-% enthält und der Weichmacher ein Fettstoff mit einem Molekulargewicht bis 1500 ist.

Das Styrol-Polymerisat enthält Styrol oder Methylstyrol, und zwar in einer Menge von mehr als 50 und vor allem mehr als 80 Gew.-% der Monomeren. Comonomere des Styrols bzw. Methylstyrols können sein: Acrylate und Methacrylate mit 1 bis 12 C-Atomen in der Alkoholkomponente, insbesondere mit 2 bis 8 C-Atomen. Die Acrylsäureester können auch reaktive Gruppen für eine spätere Nachvernetzung enthalten. Solche reaktiven Gruppen können auch Vinyl-Comonomere enthalten, z.B. eine Silan-Gruppe. Die Si(Alk)₃-Gruppe kann direkt oder über einen (CH₂)ₙ-Rest mit der Vinylgruppe verbunden sein, dabei kann n eine Zahl von 2 bis 6 sein, vorzugsweise ist n 3 oder 0. Die Alkyl-Gruppen können 1 bis 4 C-Atome enthalten, vorzugsweise 1 oder 2. Weitere Comonomere können sein: Vinylester, Maleinsäureester, (jeweils ebenfalls mit 1 bis 12, vorzugsweise 2 bis 8 C-Atomen in der Alkoholkomponente, Ethylen, Acrylamid, Acrylsäure, Butadien, Acrylnitril, und zwar sowohl einzeln als auch im Gemisch. Das Molekulargewicht liegt über 100 000 g/mol. Handelsübliche Styrol-Copolymerisate sind: Acronal 290 D, Scopacryl D 343, Ubatol VAF 1539, Acronal S 360 D, Scopacryl PAA D 8875, Acronal S 400, Acronal S 401, Styrofan A 900, Rhodopas DS 913, Joncryl 678, Vinnapas LL 6010 und SAF 54, Neocryl A 621 (Copolymere aus Styrol, Acrylsäureester). Pliotec LS 1 (Terpolymer aus Styrol, Butylacrylat, Methacrylsäure), Mowilith DM 611, Mowilith DM 680, Styropor P 555 (Reinstyrol), Buna EM 2116, Styrolux 684 D, Rhodopas SB 012, (Copolymere aus Styrol, Butadien), Novodur P2M, Synthomer VL 10286 (Terpolymere aus Styrol, Butadien und Acrylnitril).

Die Styrol-Copolymerisate können nach bekannten Verfahren hergestellt werden, insbesondere durch Emulsions- oder Perlpolymerisation. Dabei entstehen wäßrige Dispersionen mit einer Konzentration von ca. 40 bis 70 Gew.-% an Styrol-Copolymerisat. Ihre Herstellung in Masse oder Lösung ist aber ebenfalls möglich.

Es ist als überraschend anzusehen, daß diese aromatischen Polymere mit den aliphatischen Fettstoffen verträglich sind. Es ist ferner als überraschend anzusehen, angesichts der ständigen Forderung (siehe Klebstoff-Tuben), die Substratoberflächen zu trocknen und fettfrei zu machen, um eine gute Haftung zu erzielen, daß dabei die Festigkeit kaum verändert wird. Die Überraschung ist deswegen besonders groß, weil der Gehalt an Fettstoffen nicht nur wenige Prozent, sondern im allgemeinen 0,5 bis 60 und zweckmäßigerweise 10 bis 50 Gew.-%, insbesondere 15 bis 40 Gew.-%, bezogen auf das Bindemittel betragen kann. Die Zugscherfestigkeit von Klebstoffen beträgt dann immer noch > 1, vorzugsweise > 2, insbesondere > 4 N/mm² für Buchenholz.

Unter "Fettstoffen" sind Fettsäuren, Fettalkohole und deren Derivate zu verstehen. Im allgemeinen ist ihr Molekulargewicht größer als 100, insbesondere größer als 200. Die obere Grenze ist 1 500, vorzugsweise 300 bis 1 500.

Unter "Fettsäuren" werden Säuren verstanden, die eine oder mehrere Carboxyl-Gruppen (-COOH) enthalten. Die Carboxyl-Gruppen können mit gesättigten, ungesättigten, unverzweigten oder verzweigten Alkyl-Resten mit mehr als 8, insbesondere mehr als 12 C-Atomen verbunden sein. Sie können neben den oben beschriebenen -OH, -SH, -C = C-, -COOH, Amino-, Säureanhydrid-Gruppen oder Epoxidgruppen weitere Gruppen wie Ether-, Ester-, Halogen-, Amid-, Amino-, Urethan- und Harnstoffgruppen enthalten. Bevorzugt werden jedoch Carbonsäuren wie native Fettsäuren oder Fettsäuregemische, Dimerfettsäuren und Trimerfettsäuren. Konkrete Beispiele für die Fettsäuren sind neben den gesättigten insbesondere die ein- oder mehrfach ungesättigten Säuren Palmitolein-, Öl-, Elaidin-, Petroselin-, Eruca-, Ricinol-, Hydroxymethoxystearin-, 12-Hydroxystearin-, Linol-, Linolen- und Gadoleinsäure.

Als Fettsäuren können auch verwendet werden Produkte, die aus der Guerbetisierung von linearen gesättigten oder ungesättigten Fettalkoholen mit anschließender Oxidation resultieren. Als Beispiele seien genannt: 2-Ethylhexansäure, 2-Butyloctansäure, 2-Hexyldecansäure, 2-Decyltetradecansäure, 2-Tetradecyloctadecansäure, 2-Hexadecyl-C₂₀-säure oder Gemische davon.
Außerdem kommt auch Isostearinsäure als Nebenprodukt der Dimerisierung von Fettsäuren in Frage.

Neben den in der Natur vorkommenden Fettsäuren können auch Polyhydroxyfettsäuren eingesetzt werden. Diese können z.B. durch Epoxidation ungesättigter Fette und Öle oder Ester von Fettsäuren mit Alkoholen, Ringöffnung mit H-aktiven Verbindungen wie z.B. Alkoholen, Aminen und Carbonsäuren und anschließende Verseifung hergestellt werden. Die als Ausgangsmaterial benötigten Fette oder Öle können sowohl pflanzlichen als auch tierischen Ursprungs sein oder gegebenenfalls gezielt auf petrochemischem Weg synthetisiert werden.

Die Fettsäuren können auch von Öl- und Fett-basierten Rohstoffen abgeleitet sein, wie sie z.B. durch En-Reaktionen, Diels-Alder-Reaktionen, Umesterungen, Kondensationsreaktionen, Pfropfung (z.B. mit Maleinsäureanhydrid oder Acrylsäure usw.) und Epoxidierungen zugänglich sind. Als Beispiele hierfür seien genannt: a) Epoxide ungesättigter Fettsäuren wie Palmitolein-, Öl-, Elaidin-, Petroselin-, Eruca-, Linol-, Linolen, Gadoleinsäure, b) Umsetzungsprodukte ungesättigter Fettsäuren mit Maleinsäure, Maleinsäureanhydrid, Methacrylsäure oder Acrylsäure, c) Kondensationsprodukte von Hydroxycarbonsäuren wie Ricinolsäure oder 12-Hydroxystearinsäure und Polyhydroxycarbonsäuren.

Nicht alle der oben beschriebenen Fettsäuren sind bei Raumtemperatur stabil. Falls notwendig, können daher für die erfindungsgemäße Verwendung Derivate der obengenannten Fettsäuren wie Ester oder Amide eingesetzt werden.

In einer bevorzugten Ausführungsform der Erfindung werden Ester oder Partialester der obengenannten Fettsäuren mit ein- oder mehrwertigen Alkoholen verwendet. Unter "Alkoholen" sind Hydroxyl-Derivate von aliphatischen und alicyclischen gesättigten, ungesättigten, unverzweigten oder verzweigten Kohlenwasserstoffen zu verstehen. Hierzu gehören neben einwertigen Alkoholen auch die aus der Polyurethan-Chemie an sich bekannten niedermolekularen Kettenverlängerungsmittel bzw. Vernetzer mit Hydroxylgruppen. Konkrete Beispiele aus dem niedermolekularen Bereich sind Methanol, Ethanol, Propanol, Butanol, Pentanol, Decanol, Octadecanol, 2-Ethylhexanol, 2-Octanol, Ethylenglykol, Propylenglykol, Trimethylenglykol, Tetramethylenglykol, Butylenglykol-2,3, Hexamethylendiol, Octamethylendiol, Neopentylglykol, 1,4-Bishydroxymethylcyclohexan, Guerbetalkohol, 2-Methyl-1,3-Propandiol, Hexantriol-(1,2,6), Glycerin, Trimethylolpropan, Trimethylolethan, Pentaerythrit, Sorbit, Formit, Methylglycosid, Butylenglykol, die zu Alkoholen reduzierten Dimer- und Trimer-Fettsäuren. Von Kollophoniumharzen abgeleitete Alkohole wie Abietylalkohol können ebenfalls für die Veresterung verwendet werden.

Anstelle der Alkohole können auch OH-haltige tertiäre Amine, Polyglycerin oder teilweise hydrolysierte Polyvinylester verwendet werden.

Außerdem können zur Oligomerisierung Polycarbonsäuren oder Hydroxycarbonsäuren zugestzt werden. Beispiele hierfür sind Oxalsäure, Malonsäure, Bernsteinsäure, Maleinsäure, Fumarsäure, Glutarsäure, Adipinsäure, Korksäure, Sebacinsäure, 1,11-Undecandisäure, 1,12-Dodecandisäure, Phthalsäure, Isophthalsäure, Terephthalsäure, Hexahydrophthalsäure, Tetrahydrophthalsäure oder Dimerfettsäure, Trimerfettsäure, Zitronensäure, Milchsäure, Weinsäure, Ricinolsäure, 12-Hydroxystearinsäure. Bevorzugt wird Adipinsäure verwendet.

Beispiele für geeignete Ester sind neben den teilweise verseiften Fetten, wie Glycerinmonostearat, vorzugsweise die natürlichen Fette und Öle von Raps (neu) und (alt), Sonnenblumen, Soja, Lein, Ricinus, Kokosnüssen, Ölpalmen, Ölpalmkernen und Ölbäumen und deren Methylester. Bevorzugte Fette und Öle sind z.B. Rindertalg mit einer Kettenverteilung von 67 % Ölsäure, 2 % Stearinsäure, 1 % Heptadecansäure, 10 % gesättigte Säuren der Kettenlänge C12 bis C16, 12 % Linolsäure und 2 % gesättigte Säuren mit > C18 Kohlenstoffatomen oder z.B. das Öl der neuen Sonnenblume (NSb) mit einer Zusammensetzung von ca. 80 % Ölsäure, 5 % Stearinsäure, 8 % Linolsäure und ca. 7 % Palmitinsäure. Selbstverständlich können z.B. auch die entsprechenden Epoxide und Umsetzungsprodukte mit Maleinsäureanhydrid verwendet werden. Weitere Beispiele sind partiell und vollständig dehydratisiertes Ricinöl, partiell acetyliertes Ricinusöl, Ringöffnungsprodukte von epoxydiertem Sojaöl mit Dimerfettsäure.

Außerdem können Fettsäureester und ihre über Epoxidation zugänglichen Derivate verwendet werden. Als Beispiel für derartige Ester seien genannt: Sojafettsäuremethylester, Leinölfettsäuremethylester, Ricinolsäuremethylester, Epoxystearinsäuremethylester, Epoxystearinsäure-2-ethylhexylester. Von den Glyceriden werden die Triglyceride bevorzugt, z.B. Rüböl, Leinöl, Sojaöl, Ricinusöl, partiell und vollständig dehydratisierte Ricinusöle, partiell acetyliertes Ricinusöl, Sojaölepoxid, Leinölepoxid, Rübölepoxid, epoxidiertes Sonnenblumenöl.

Vorzugsweise werden mit Nucleophilen ringgeöffnete epoxidierte Triglyceride ungesättigter Fettsäuren eingesetzt werden. Unter Nucleophilen sind Alkohole wie z.B. Methanol, Ethanol, Ethylenglykol, Glycerin oder Trimethylolpropan, Amine wie z.B. Ethanolamin, Diethanolamin, Triethanolamin, Ethylendiamin oder Hexamethylendiamin oder Carbonsäuren wie z.B. Essigsäure, Dimerfettsäure, Maleinsäure, Phthalsäure oder ein Gemisch von Fettsäuren mit 6 bis 36 C-Atomen zu verstehen.

Die Fette und Öle (Triglyceride) können sowohl in nativer Form als auch nach thermischer und/oder oxidativer Behandlung bzw. die über Epoxidation oder über die Addition von Maleinsäureanhydrid bzw. Acrylsäure zugänglichen Derivate eingesetzt werden. Konkrete Beispiele sind: Palmöl, Erdnußöl, Rüböl, Baumwollsaatöl, Sojaöl, Ricinusöl, partiell und vollständig dehy-dratisierte Ricinusöle, partiell acetylierte Ricinusöle, Sonnenblumenöl, Leinöl, Standöle, geblasene Öle, epoxidiertes Sojaöl, epoxidiertes Leinöl, Rapsöl, Kokosöl, Palmkernöl und Talge.

Als Derivate können auch Amide der obengenannten Fettsäuren verwendet werden. Diese können durch Umsetzung mit primären und sekundären Aminen oder Polyaminen erhalten werden, z.B. mit Monoethanolamin, Diethanolamin, Ethylendiamin, Hexamethylendiamin, Ammoniak.

Unter "Fettalkoholen" werden Verbindungen verstanden, die eine oder mehrere Hydroxylgruppen enthalten. Die Hydroxylgruppen können mit gesättigten, ungesättigten, unverzweigten oder verzweigten Alkylresten mit mehr als 8, insbesondere mehr als 12 C-Atomen verbunden sein. Sie können neben den für die spätere Umsetzung mit den Alkylenoxiden notwendigen -SH, -C = C-, -COOH, Amino, Säureanhydrid-Gruppen oder Epoxidgruppen weitere Gruppen enthalten, z.B. Ether-, Ester-, Halogen-, Amid-, Amino-, Harnstoff- und Urethan-Gruppen. Konkrete Beispiele für die erfindungsgemäßen Fettalkohole sind: Ricinoleylalkohol, 12-Hydroxystearylalkohol, Oleylalkohol, Erucylalkohol, Linoleylalkohol, Linolenylalkohol, Arachidylalkohol, Gadoleylalkohol, Erucylalkohol, Brassidylalkohol, Dimerdiol (= Hydrierungsprodukt des Dimerfettsäuremethylesters).

Eingesetzt werden können auch verzweigte Alkohole, sogenannte Guerbetalkohole, die sich aus der Kondensation von linearen, gesättigten oder ungesättigten Alkohllen ergeben. Beispiele hierfür sind: 2-Ethylhexanol, 2-Butyloctanol, 2-Hexyldecanol, 2-Tetradecyloctandecanol, 2-Hexadecyl-C₂₀-alkohol, außerdem auch Isostearykalkohol sowie Gemische, die sich aus der Guerbetisierung technischer Alkohole ergeben.

Als Derivate der Fettalkohole können symmetrische und unsymmetrische Ether und Ester mit Mono- und Polycarbonsäuren eingesetzt werden. Unter Monocarbonsäuren versteht man Ameisen-, Essig-, Propion-, Butter-, Valerian-, Capron-, Önanth-, Capryl-, Pelargon-, Caprin-, Undecan-, Laurin-, Tridecan-, Myristin-, Pentadecan-, Palmitin-, Margarin-, Stearin-, Nonadecan-, Arachin-, Behen-, Lignocerin-, Cerotin- und Melissinsäure. Polycarbonsäuren sind z.B. Oxalsäure, Adipinsäure, Maleinsäure, Weinsäure und Zitronensäure. Gleichzeitig können als Carbonsäure auch die oben beschriebenen Fettsäuren eingesetzt werden, wie z. B. Ölsäureoleylester.

Die Fettalkohole können auch verethert sein, insbesondere mit mehrwertigen Alkoholen, z.B. Alkylpolyglykoside, Dimerdiolether.

Das Gewichtsverhältnis des Styrol-Polymerisats zu dem weichmachenden Fettstoff beträgt 100 : 0,5 bis 50, vorzugsweise 100 : 2,5 bis 40 und vor allem 100 : 7,5 bis 15.

Die erfindungsgemäßen Massen können neben diesen beiden wesentlichen Komponenten noch weitere Stoffe enthalten, z.B. Antioxidantien, Pigmente, Füllstoffe, Weichmacher, Konservierungsmittel, Entschäumer, Filmbildehilfsmittel, Geruchsstoffe, Wasser, Haftvermittler, Lösungsmittel, Farbstoffe, Flammschutzmittel, Verlaufshilfsmittel, Harze, Tackifier, Viskositätsregulatoren, Dispergierhilfsmittel (z.B. Na- oder Ammoniumsalz von Polyacrylsäure), Emulgatoren (z.B. Alkyletherphosphate und Sulfosuccinate) und Verdickungsmittel (z.B. MC, HEG).

Als Harze kommen in Frage: Polyisobutylen bzw. Polybutylen (z.B. Hyvis 10 der BP), Kollophoniumharze und seine Derivate (Ester, hydrierte Produkte, Abietylalkohol), Acrylatharze, Phenolharze, Terpen-Phenolharze, Polyterpene, Epoxidharze, Kohlenwasserstoffharze, Inden-Kumaronharze und Melaminharze.

Als Antioxidantien kommen in Frage: z.B. phosphorige Säure und deren Salze, unterphosphorige Säure und deren Salze, Ascorbinsäure und deren Derivate (spez. Ascorbylpalmitat), Tocopherol und dessen Derivate, Mischungen von Ascorbinsäure-Derivaten und Tocopherol-Derivaten, sterisch gehinderte Phenolderivate, speziell BHA (tert.-Butyl-4-methoxyphenol) und BHT (2,6-Di-tert.-butyl-4-methylphenol), Gallussäure und Derivate, spez. Alkylgallate, aromatische Amine, wie z.B. Diphenylamin, Naphthylamin und 1,4-Phenylendiamin, Dihydrochinolin, organische Sulfide und Polysulfide, Dithiocarbamate und Mercaptobenzimidazol.

Als Viskositätsregulatoren kommen in Frage: z.B. Celluloseether, gehärtetes Ricinusöl und hochdisperse Kieselsäuren sowie ionische und nichtionische Verdickungsmittel, wie z.B. Polyacrylsäure und assoziative Verdicker.

Als Füllstoffe bzw. Pigmente kommen in Frage: Kreide, Schwerspat, Kaolin, Ruß, Gips, Aerosil, Kieselgel, Kaoline, Talkum, Graphit, Metalloxide von Aluminium, Eisen, Zink, Titan, Chrom, Kobalt, Nikkel, Mangan etc., gegebenenfalls als Mischoxide, Chromate, Molybdate, Carbonate, Silikate, Aluminate, Sulfate, native Fasern, Cellulose, Holzspäne, Phthalocyanine und Quarzmehl.

Vorzugsweise werden nur Fettstoffe als Weichmacher verwendet, insbesondere keine Polyalkylenoxide und/oder deren fettchemische Derivate.

Die erfindungsgemäße Masse wird im allgemeinen folgendermaßen aus den Ausgangsstoffen hergestellt: Die Zugabe des erfindungsgmeäßen Weichmachers zum Polymer bzw. zur Polymerdispersion kann nach, während oder vor der Polymerisation erfolgen. Die Formulierungen werden in der Regel so hergestellt, daß das Polymer bzw. die Polymerdispersion vorgelegt wird. Dann werden die anderen Bestandteile unter Rühren (ggf. unter erhöhter Temperatur) zugegeben.

Das Bindemittel kann bei Raumtemperatur (20 °C) flüssig, pastös oder fest sein. Insbesondere ist es flüssig, und zwar zweckmäßigerweise eine wäßrige Dispersion mit einem Feststoffgehalt von 20 bis 85, vorzugsweise 35 bis 80, insbesondere 45 bis 75 Gew.-%.

Der Feststoffgehalt für Emulsionen oder Suspensionen des erfindungsgemäßen Bindemittels liegt zwischen 20 und 75 Gew.%, vorzugsweise zwischen 40 und 60 Gew.%.

Die erfindungsgemäßen Weichmacher können in der Regel folgende Veränderungen an dem Styrol-Polymerisat bewirken:
- Die Glasumwandlungstemperatur wird herabgesetzt.
- Das Copolymerisat wird haftklebrig.
- Die Viskosität wird teilweise erhöht, teilweise verringert.
- Die Bruchdehnung wird drastisch erhöht.
- Die Dehnung bei der maximalen Kraft wird ebenfalls stark erhöht, was auf ein gummielastisches Verhalten hindeutet.

Von besonderer Bedeutung ist aber, daß diese Effekte permanent sind, d.h. ein Auswandern des Weichmachers wurde innerhalb von 3 Wochen bei 60 °C nicht beobachtet. Dafür spricht folgende Versuchsdurchführung: Die Filme wurden 3 Wochen bei 60 °C zwischen Silikonpapier gelagert und im Abstand von 3 Tagen bezüglich Verfleckung des Papiers beurteilt.

Aufgrund dieser Eigenschaften eignen sich die erfindungsgemäßen Zusammensetzungen als Bindemittel zur Konfektionierung von Klebstoffen, Dichtungsmassen und Beschichtungsmassen.

Als Klebstoffe seien konkret genannt: Schmelz-, Lösungsmittel-, Dispersions-, Montage-, Haft- und Kontakt-Klebstoffe sowie Redispersionspulver, Alleskleber und Klebestifte. Zu verkleben sind damit: Papier, Pappe, Holz, Textilien, Wandbeläge, Fliesen, Etiketten, Leder, Gummi, Kunststoffe, Glas, Keramik und Metall. Als Beschichtungen seien genannt: Plastisol, Dispersionsfarbe und Isolierung von Dächern. Die Dichtungsmassen können sowohl im Bau- als auch im Fahrzeugbereich eingesetzt werden. Die erfindungsgemäße Masse kann auch hydraulischen Bindemitteln - zur Elastifizierung oder Haftverbesserung - zugesetzt werden, z.B. Zement oder Gips.

Die Erfindung wird durch folgende Beispiele erläutert:

### Beispiele

### Serie A

### I. Ausgangsstoffe

| | |
|---|---|
| 1. | Acronal 290 D = 50 %ige wäßrige Dispersion eines Styrol/Butylacrylat-Copolymeren (anionisch) |
| 2. | SÖ-Epox = epoxidiertes Sojaöl, |
| 3. | SÖ-Epox/DFS = Umsetzungsprodukt von epoxidiertem Sojaöl mit Dimerfettsäure in Kokos-2-ethylhexylester, |
| 4. | MeRi = Ricinolsäuremethylester, |
| 5. | MeTiO5 = Ölsäuremethylester, |
| 6. | ÖLM-Epox = Ölsäuremethylester epoxidiert, |
| 7. | MPG-Ester = Ester von Vorlauffettsäure mit Monophenylglykol, |
| 8. | KEH = Kokos-2-ethylhexylester, |
| 9. | RME = Rapsfettsäuremethylester. |

### II. Herstellung der Massen

100 Gew.-Teile von Acronal 290 D wurden mit den in der Tabelle angegebenen Mengen an Fettstoffen in einem Becherglas bei 60 °C innerhalb von 30 Min. gemischt, bis die Dispersion homogen aussah.

### III.Untersuchung der Massen

Die untersuchten Proben wurden folgendermaßen hergestellt: Die modifizierten Dispersionen wurden in Formen bei 40 °C in einem Brutschrank verfilmt, 7 Tage im Normklima (23 °C, 50 % LF) gelagert und dann vermessen.

Die Feststoff-Konzentration (FK) wurde folgendermaßen bestimmt: 5 bis 10 g der Probe werden in einer Aluschale 2 Stunden bei 120 bis 130 °C erhitzt. Dann wird zurückgewogen.

Die Viskosität (Visk) wurde folgendermaßen bestimmt: Brookfield RVT (20 °C).

Die Dehnung wurde unter folgenden Bedingungen bestimmt: Instron 4302, automatisches Materialprüfsystem Serie IX, Probenbreite 5 mm, Probendicke 1 mm, Probenlänge 15 mm, Zuggeschwindigkeit 200 mm/Min.. Bestimmt wurde die Dehnung bei max. Kraft und beim Bruch. Die Kraft gibt die Reißkraft an.

Die Verträglichkeit der Komponenten (Schwitzen) wurde folgendermaßen bestimmt: Die Filme wurden bei 60 °C zwischen Silikonpapier gelagert und nach 3 Wochen bezüglich Verfleckung des Papiers beurteilt.

Die Glasumwandlungs-Temperatur (TG) wurde folgendermaßen bestimmt: Meßzelle DSC 910 mit DuPont 2100, Al-Tiegel mit Deckel, 3 1/h N2, 20 K/Min..

Die Haftklebrigkeit (RK) wurde folgendermaßen bestimmt: Eine Stahlkugel (Durchmesser 20 mm, Gewicht 32,25 g) rollte eine Rampe (Höhe 26 mm, Laufstrecke 115 mm) auf einen Film der erfindungsgemäßen Zusammensetzung) hinunter. Die auf dem Polymerfilm zurückgelegte Strecke wurde gemessen (Angabe in mm).

Die einzelnen Ergebnisse wurden in der Tabelle zusammengefaßt. Sie zeigen:
- Die aliphatischen Weichmacher sind mit den aromatischen Copolymeren verträglich (kein Schwitzen).
- Die Glasumwandlungstemperatur wird stark verringert. Es werden Werte unter -10 °C und sogar unter -20 °C erhalten.
- Die Massen wurden bei ca. 10%igen Zusatz haftklebrig.
- In der Regel steigt die Viskosität stark an. Sie kann aber auch gleich bleiben oder gar abnehmen.
- Die Reißdehnung steigt an, teilweise sehr stark.

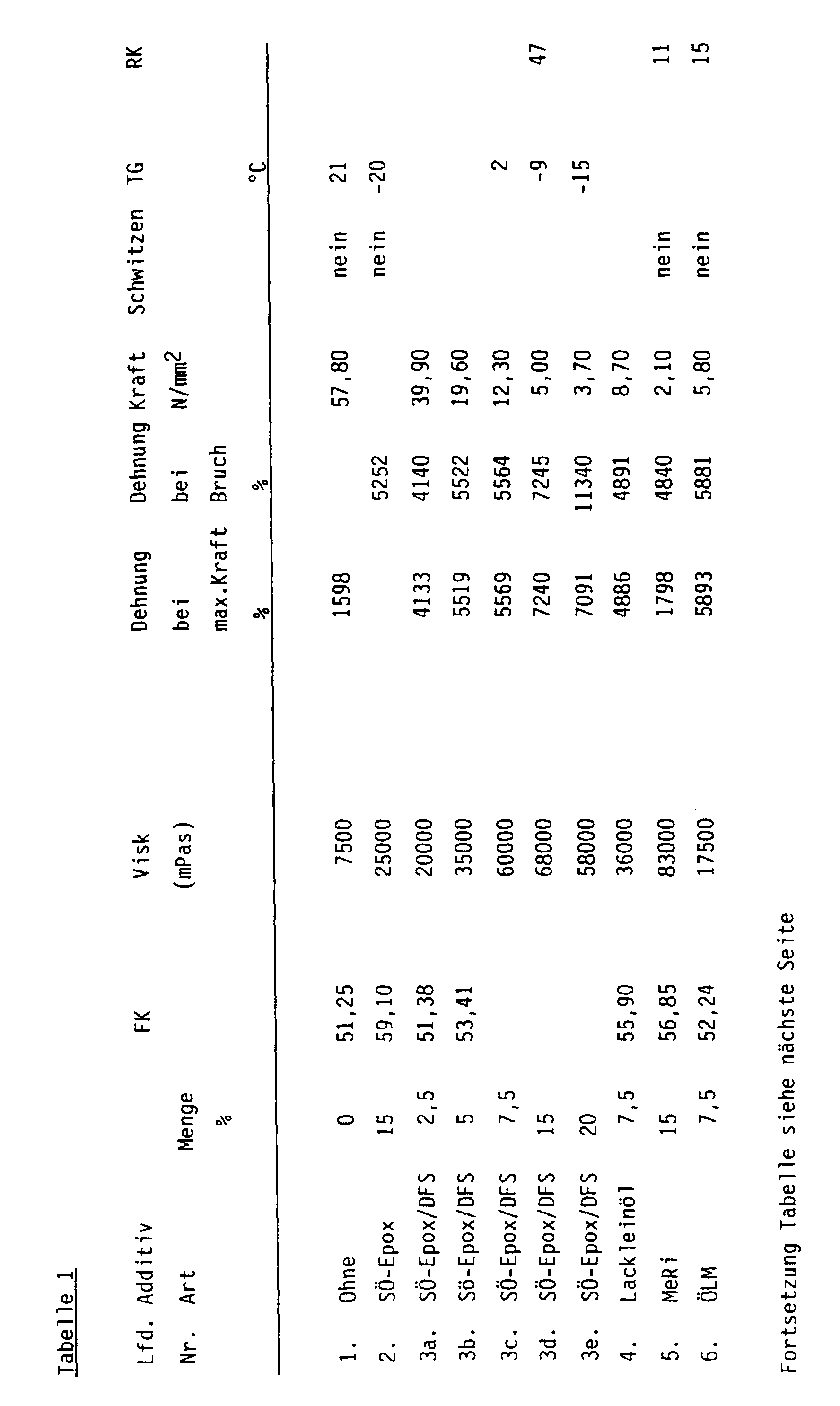

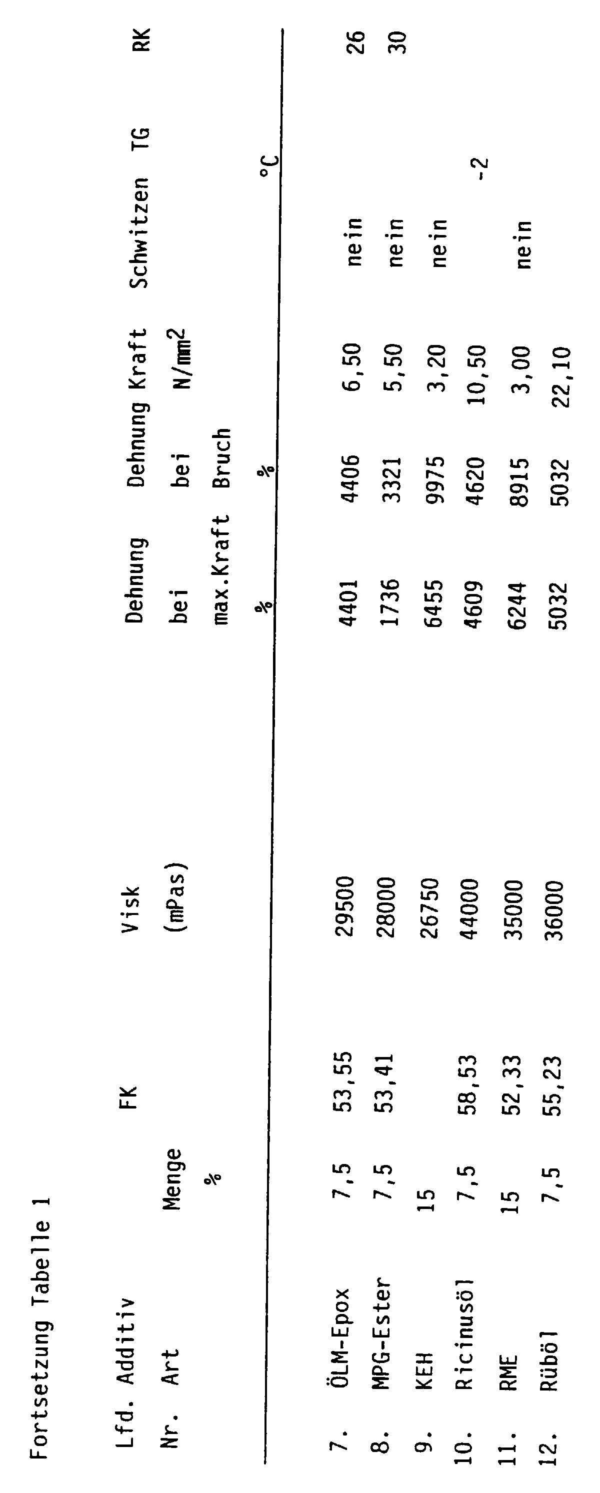

### Serie B

92,5 Gew.-TEile von Acronal 290 D wurden mit 7,5 Gew.-Teilen Fettstoffen wie in Serie A gemischt und zu einem Film verarbeitet. Es wurden folgende Ergebnisse erhalten:

| Fettstoff | Visk. (mPas) | Film-eigenschaften | Naßtack | TG (°C) |
|---|---|---|---|---|
| Laurinsäuremethylester | 36000 | transparent, stark haftklebrig | stark fädenziehend | -11 |
| Myristinsäuremethylester | 37000 | transparent, stark haftklebrig | stark fädenziehend | -13 |
| Palmitinsäuremethylester | 40000 | transparent, leicht haftklebrig | nein | -15 |
| Stearinsäuremethylester | 20000 | leicht trübe, nicht klebrig | nein | -10 |

### Serie C

90 Gew.-Teile von Acronal 290 D wurden mit 10 Gew.-Teilen Fettstoffen in einem Becherglas bei 60 °C innerhalb von 30 Min. gemischt, bis die Dispersion homogen aussah. Dann wurden daraus Filme hergestellt, indem die Dispersionen in Formen bei 40 °C in einem Trockenschrank 7 Tage bei 23 °C und 50 % rel. Luftfeuchtigkeit gelagert wurden.

In folgenden Fällen waren die Filme stark haftklebrig, gummielastisch und durchsichtig: Glycerintricaprylat, Ringöffnungsprodukt von Epoxystearinsäuremethylester mit Methanol oder Essigsäure- und Dimerfettsäuredimethylester.

Leicht haftklebrig, durchsichtig und gummielastisch waren die Filme in folgenden Fällen: Umsetzungsprodukt von Epoxystearinsäuremethylester mit Bernsteinsäure, mit Glykol (2 : 1) und mit Ricinolsäurebutylester sowie Erucasäuremethylester.

Kontaktklebrige, transparente und gummielastische Filme wurden mit Ocenol 90/95 (acetyliert) erhalten. Dabei handelt es sich um einen ungesättigten Fettalkohol mit 18 C-Atomen und einer Jodzahl von 90 bis 95.

Leicht trübe, stark haftklebrig und gummielastische Filme werden mit Umsetzungsprodukten von Epoxystearinsäuremethylester mit Trimethylolpropan (TMP, 3 : 1) oder mit Bernsteinsäuremonomethylester (1 : 1) erhalten.

Alle Filme "schwitzten" den Weichmacher nicht aus. Dazu wurden die Filme bei 60 °C zwischen Silikonpapier gelagert und nach 3 Wochen auf Fettflecken im Papier untersucht.

### Serie D

Zu 7 Gew.-Teilen Mowilith DM 680 (wäßrige Dispersion von Homo-Polystyrol) wurden unter Rühren 3 Gew.-Teile von Epoxystearinsäuremethylester gegeben und 30 Min. bei 60 °C gerührt. Das Homo-Polystyrol wurde dadurch extrem klebrig und gummielastisch. Die Viskosität der Dispersion bei 20 °C betrug nur 1850 mPas.
Ein Vergleichsversuch, bei dem als Weichmacher Dibutylphthalat eingesetzt wurde, führte dagegen zu einer Viskosität von 5500 mPas bei 20 °C. Es ließ sich kein homogener Film herstellen. Das Produkt war spröde und bröselig.

### Serie E

### I. Lösungsverhalten von Kolophoniumharzen in Fettsäureestern:

8 Teile nichtkristallisierendes Balsamharz (Resitherm CA) wurde bei 80 °C in 2 Teilen verschiedenen fettchemischen Substanzen und Monophenylglykol (als Referenz) gelöst. Dann wurde die Viskosität bei dieser Temperatur gemessen und die Lösung nach Abkühlen auf RT bezüglich ihrer Konsistenz beurteilt.

**Tabelle 3**

| Lfd. Nr. | Lösungsmittel | Viskosität 80 °C (Brookfield, RVT) | Konsistenz bei Raumtemperatur |
|---|---|---|---|
| 1 | Myristinsäuremethylester | 550 | mittelviskos |
| 2 | Ölsäuremethylester | 625 | hochviskos bis fest |
| 3 | Epoxystearinsäuremethylester | 750 | hochviskos bis fest separiert |
| 4 | Ricinolsäuremethylester | 900 | hochviskos bis fest |
| 5 | Kokos-2-ethylhexylester | 800 | hochviskos bis fest |
| 6 | Laurinsäuremethylester | 275 | mittelviskos |
| 7 | Palmitinsäuremethylester | 600 | hochviskos bis fest |
| 8 | Epoxystearinsäure-2-ethylhexylester | 525 | hochviskos bis fest separiert |
| 9 | Monophenylglykol | 475 | mittelviskos |

Die Versuche zeigen, daß die Fettderivate insbesondere mit niedrigen Molmassen von 200 bis 400 und mit einer oder mehreren Esterfunktionen neben ihrer weichmachenden Wirkung auf Styrol-Polymere ausgezeichnete Löseeigenschaften für die in Fußboden-Klebstoffen üblicherweise eingesetzten Kolophoniumharze besitzen.

### II. Anwendung der Harzlösungen bei Fußbodenklebstoffen

| 1. Grundmischung | Gewichtsanteile |
|---|---|
| Styrolacrylat (50 % FK) | 24,0 |
| Dispergierhilfsmittel und Emulgatoren | 2,5 |
| Entschäumer | 0,02 |
| Konservierungsmittel | 0,02 |
| Butyltriglykol | 1,0 |
| Wasser | 5,0 |
| Acrylatverdicker (25 % FK) | 0,2 |
| Füllstoff (Kreide) | 48,0 |
| Harzlösung | 16,0 |
| Einstellwasser | s. Beispiele |
| Summe: | s. Beispiele |

| 2. Harzlösung | Beispiel 1 | Beiispiel 2 | Beispiel 3 |
|---|---|---|---|
| Kolophoniumharz | 85,0 | 85,0 | 85,0 |
| Rapsölmethylester | 15,0 | 0,0 | 0,0 |
| Laurinsäuremethylester | 0,0 | 15,0 | 0,0 |
| Myristinsäuremethylester | 0,0 | 0,0 | 15,0 |
| Einstellwasser | 1,1 | 1,7 | 1,0 |
| Rezeptsumme: | 97,84 | 98,44 | 97,74 |

| 3. Eigenschaften: | | | |
|---|---|---|---|
| Viskosität; Haake VT 181 [mPas] | 13600 | 14000 | 10400 |
| pH-Wert | 7,0 | 7,2 | 7,1 |
| Festkörpergehalt (105 °C, 24 h) | 76,1 | 75,6 | 76,2 |
| Offene Zeit [min] | 20 | 20 | 25 |
| Schälwiderstand DIN 53278 [N/cm]: | | | |
| - Textilbelag mit Schaumrücken | MB | MB | MB |
| - Textilbelag mit synth. Zweitrücken | 13 | 12 | 10 |
| MB = Materialbruch im Belag | | | |

### Serie F

10 g des Fettstoffes werden zu 90 g einer Dispersion von Styrol/Butylacrylat-Copolymer (Acronal-290-D, der Fa. BASF) gegebenn und 1,5 min mit einem Ultra-Turrax T 25 bei einer Umdrehung von 240 001/min gemischt. Aus dem Gemisch wurde ein Film gegossen durch Ablüftung bei Raumtemperatur mit Umgebungsluft. Nach 6 Wochen Lagerung wurden folgende Ergebnisse erhalten.

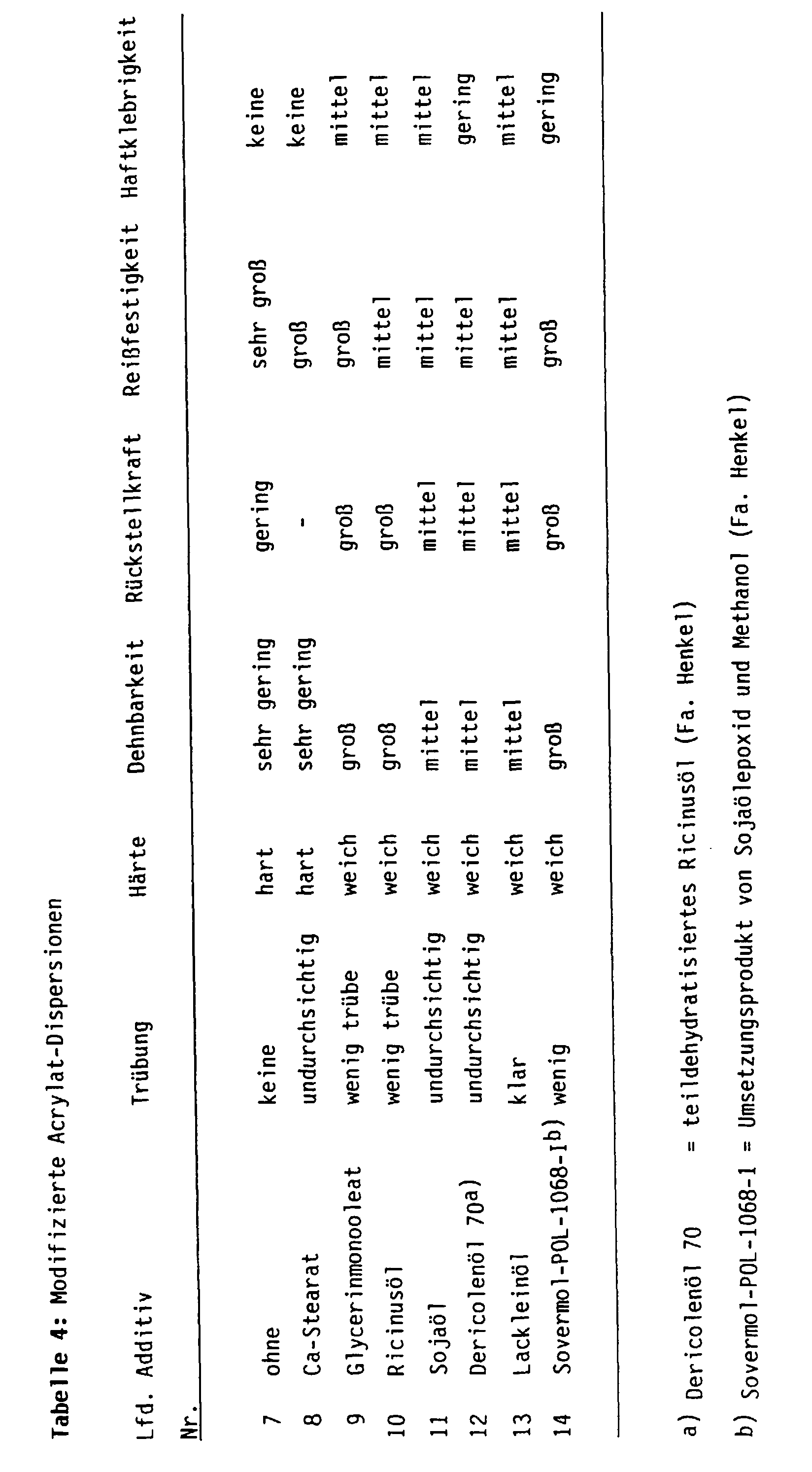

### Serie G

Folgende Zusammensetzung (in Gew.-%) eignet sich gut als Fugendichtmasse:

| | |
|---|---|
| 28,45 | Acronal 290 D |
| 3,00 | Epoxystearinsäuremethylester |
| 65,00 | Kreide |
| 0,25 | Ammoniak |
| 2,00 | Wasser |
| 1,00 | TiO₂ |
| 0,30 | Netzmittel |

Nach 4 Wochen Lagerung bei Normalklima wurden Prüfkörper nach DIN 18540 hergestellt und untersucht.

Das Rückstellvermögen beträgt 22 %, wenn man den Prüfkörper um 100 % dehnt und nach 24 Stunden bei Raumtemperatur 1 Stunde entspannen läßt.

Die Reißdehnung und der E 100-Modul wurden nach der DIN EN 28 339, Verfahren A, bei 23 °C bestimmt. Es wurden folgende Werte erhalten: (Der E 100-Modul ist der Dehn/Spannungs-Wert bei 100 % Dehnung)

| | Reißdehnung [%] | E 100-Modul |
|---|---|---|
| Beton | 120 | 0,04 |
| Holz | 130 | 0,05 |
| PVC | 105 | 0,015 |
| Aluminium | 185 | 0,06 |

## Patentansprüche

1. Verwendung eines Bindemittels auf der Basis von Homo- oder Copolymeren des Styrols mit mehr als 50 Gew.-% Styrol sowie mit einem Gehalt an Fettstoffen - nämlich Fettsäuren, Fettalkohole und deren Derivate - mit einem Molekulargewicht bis 1 500 als Weichmacher zum Kleben.

2. Verwendung nach Anspruch 1, gekennzeichnet durch einen Gehalt an 0,5 bis 60, vorzugsweise 10 bis 50 und insbesondere 15 bis 40 Gew.% an Fettstoffen, bezogen auf das Bindemittel insgesamt.

3. Verwendung nach Anspruch 1 oder 2, gekennzeichnet durch Derivate von Fettsäuren oder Fettalkoholen, insbesondere Triglyceride von höheren Fettsäuren und vorzugsweise natürliche Fette und Öle als Fettstoffe.

4. Verwendung nach mindestens einem der vorangegangenen Ansprüche, dadurch gekennzeichnet, daß es auf einem physikalisch und/oder chemisch abbindenden Polymeren mit einem Molekulargewicht von 8 000 bis 2 000 000, vorzugsweise 10 000 bis 800 000 und insbesondere von 30 000 bis 300 000 basiert.

5. Verwendung nach mindestens einem der vorangegangenen Ansprüche, dadurch gekennzeichnet, daß es bei 20 °C flüssig oder streichfähig ist und insbesondere eine wäßrige Dispersion mit einem Feststoffgehalt von 20 bis 85, vorzugsweise 35 bis 80 und insbesondere 45 bis 75 Gew.-% ist.

6. Verwendung nach mindestens einem der Ansprüche 1 bis 5, dadurch gekennzeichnet, daß man zur Herstellung des Bindemittels den Fettstoff dem Styrol-Polymerisat vor, bei oder nach seiner Herstellung zusetzt, insbesondere einer wäßrigen Dispersion des Styrol-Polymerisates.

7. Verwendung nach Anspruch 1, gekennzeichnet durch das Kleben von Holz, Pappe, Papier, Wandbelägen - insbesondere Tapeten -, Kork, Leder, Filz, Textilien, Kunststoffen - insbesondere Bodenbelägen aus PVC, Linoleum und Polyolefinen, sei es in Form von Folien oder textilen Flächengebilden -, mineralischen Substraten - insbesondere Glas, Quarz, Schlacken, Gestein und Keramik - und Metallen, insbesondere mit unterschiedlichem elastischem Verhalten oder unterschiedlichen Wärmeausdehnungskoeffizienten der Substrate.

## Claims

1. The use of a binder based on homopolymers or copolymers of styrene with a styrene content of more than 50% by weight and with a content of fatty compounds, namely fatty acids, fatty alcohols and derivatives thereof, having a molecular weight of up to 1,500 as plasticizers for bonding.

2. The use claimed in claim 1, characterized by a content of 0.5 to 60% by weight, preferably 10 to 50% by weight and more preferably 15 to 40% by weight of fatty compounds, based on the binder as a whole.

3. The use claimed in claim 1 or 2, characterized by derivatives of fatty acids or fatty alcohols, more especially triglycerides of higher fatty acids and preferably natural fats and oils as the fatty compounds.

4. The use claimed in at least one of the preceding claims, characterized in that it is based on a physically and/or chemically setting polymer with a molecular weight of 8,000 to 2,000,000, preferably 10,000 to 800,000 and more preferably 30,000 to 300,000.

5. The use claimed in at least one of the preceding claims, characterized in that it is liquid or spreadable at 20°C and, in particular, assumes the form of an aqueous dispersion with a solids content of 20 to 85% by weight, preferably 35 to 80% by weight and more preferably 45 to 75% by weight.

6. The use claimed in at least one of claims 1 to 5, characterized in that, to produce the binder, the fatty compound is added to the styrene polymer, more particularly to an aqueous dispersion of the styrene polymer, before, during or after its production.

7. The use claimed in claim 1, characterized by the bonding of wood, paper, paperboard, wall coverings, more especially wallpapers, cork, leather, felt, textiles, plastics, more especially floor coverings or PVC, linoleum and polyolefins in the form of sheeting or flat textile materials, mineral substrates, more especially glass, quartz, slags, rock and ceramics, and metals, more particularly with different elastic behavior or different thermal expansion coefficients of the substrates.

## Revendications

1. Utilisation d'un liant à base d'homo- ou copolymères de styrène avec plus de 50 % en poids de styrène ainsi qu'avec une teneur en matières grasses - à savoir en acides gras, alcools gras et leurs dérivés - ayant un poids moléculaire allant jusqu'à 1500 comme plastifiant pour le collage.

2. Utilisation selon la revendication 1,
caractérisée par
une teneur de 0,5 à 60, de préférence de 10 à 50 et en particulier de 15 à 40 % en poids de matières grasses, par rapport aux liants au total.

3. Utilisation selon la revendication 1 ou 2,
caractérisée par
des dérivés d'acides gras ou d'alcools gras, en particulier des triglycérides d'acides gras supérieurs et de préférence de matières grasses naturelles et d'huiles comme matières grasses.

4. Utilisation selon l'une quelconque des revendications précédentes,
caractérisée en ce qu'
elle se fonde sur un polymère durcissant par un moyen physique et/ou chimique ayant un poids moléculaire de 8 000 à 2 000 000, de préférence de 10 000 à 800 000 et en particulier de 30 000 à 300 000.

5. Utilisation selon au moins une des revendications précédentes,
caractérisée en ce que
le matériau est liquide ou étalable à 20°C , et est en particulier une dispersion aqueuse ayant une teneur de 20 à 85, de préférence de 35 à 80, et en particulier de 45 à 75 % en poids de matières solides.

6. Utilisation selon au moins une des revendications 1 à 5,
caractérisée en ce que,
pour produire le liant, on ajoute la matière grasse au polymère de styrène, avant, pendant ou après sa fabrication, en particulier à une dispersion aqueuse du polymère de styrène.

7. Utilisation selon la revendication 1,
caractérisée par
le collage du bois, du carton, du papier, des revêtements de parois - en particulier des tentures - du liège, du cuir, du feutre, des textiles, des matières plastiques - en particulier des revêtements de sol en PVC, en linoléum et en polyoléfines, qu'ils soient sous forme de feuilles ou de feuilles textiles -, de substrats minéraux - en particulier de verre, de quartz, de laitier, de minerais et de céramiques - et de métaux, en particulier à comportements élastiques différents, ou à coefficients thermiques différents des substrats.
